# FASCICULE DE BREVET EUROPEEN

(11) **EP 0 448 477 B1**
(45) Date de publication et mention de la délivrance du brevet: **31.08.1994**
(21) Numéro de dépôt: 91400781.0
(22) Date de dépôt: 22.03.1991
(51) Int. Cl.: F16D 23/14

(54) **Montage pour l'assujettissement d'une pièce d'accostage à un diaphragme, notamment pour véhicules automobiles**
Vorrichtung zur Befestigung eines Druckringes auf einer Tellerfeder, insbesondere für Kraftfahrzeuge
Device for securing a thrust ring to a diaphragm spring, especially for automotive vehicles

(30) Priorité: 23.03.1990 FR 9003731
(43) Date de publication de la demande: 25.09.1991
(73) Titulaire: VALEO, 75848 Paris Cédex 17 (FR)
(72) Inventeur: Gay, Christian, F-80090 Amiens (FR); Hagnere, Raymond, F-80080 Amiens (FR)
(74) Mandataire: Gamonal, Didier

(56) Documents cités:
- FR-A- 2 597 560
- FR-A- 2 633 353
- FR-A- 2 633 355

## Description

La présente invention concerne un montage pour l'assujettissement d'une pièce d'accostage à un diaphragme, notamment pour véhicules automobiles selon le préambule de la revendication 1.

Un tel montage est décrit dans le document FR-A-2 633 353.

Dans celui-ci, le jonc porté par la pièce d'accostage présente une patte ouverte saillante et la rondelle élastique est assemblée à la pièce d'accostage par ses pattes issues de zones d'ancrage reliées entre elles par des ondulations de la rondelle ondulée.

La patte ouverte a une forme tortueuse et comporte une partie radiale prolongée par une partie axiale portant à son extrémité des brins terminaux radiaux interposés axialement entre le roulement de la butée de débrayage et la rondelle élastique.

Une telle disposition, dans certaines applications, peut poser des problèmes.

En effet, pour rendre plus compact axialement l'ensemble butée de débrayage-pièce d'accostage, il est souhaitable d'éliminer les brins terminaux du jonc, pour gagner de l'encombrement axial.

Il se pose alors un problème de démontage car lorsque l'on désassemble la butée de la pièce d'accostage, il faut rapprocher la butée par rapport à celle-ci, en sorte qu'il devient impossible de glisser un outil de démontage entre la rondelle élastique et la butée de débrayage.

Il est également impossible de pratiquer un démontage au niveau de la rondelle élastique, car les ondulations de celle-ci empêchent tout accès au jonc.

En outre il est souhaitable d'avoir un serrage aussi régulier que possible du diaphragme entre la rondelle élastique et la pièce d'accostage.

La présente invention a pour objet de pallier ces inconvénients, et donc de créer, de manière simple et économique, un nouveau montage de faible encombrement axial, tout en permettant un accès aisé au jonc et sans perturber outre mesure le serrage élastique du diaphragme.

Suivant l'invention un montage du type susindiqué est caractérisé en ce qu'un pont relie entre elle deux zones d'ancrage successives en étant dans le même plan que celles-ci, et en ce que ledit pont est en correspondance avec ladite patte ouverte du jonc pour accès à celle-ci.

Ainsi le pont remplace l'une des ondulations.

Grâce à l'invention il devient possible d'introduire un outil de démontage, telle qu'une pince, entre le diaphragme et ledit pont, en sorte que l'on peut accéder à la patte ouverte du jonc pour démontage de celui-ci.

On appréciera que ledit jonc est simplifié car la présence de bras terminaux accessibles manuellement n'est plus nécessaire.

Il en est de même dans certains cas dudit prolongement axial des pattes, ce qui rend très compact radialement le montage. Radialement, le jonc peut s'étendre tout entier radialement dans l'ouverture centrale du diaphragme et de la rondelle élastique, ce qui simplifie encore le jonc et ne perturbe pas le basculement du diaphragme.

En outre le serrage élastique du diaphragme n'est pas perturbé outre mesure, puisque seule l'une des ondulations est remplacée par un pont.

Suivant une autre caractéristique, le pont s'étend radialement intérieurement en saillie par rapport à la périphérie interne de la rondelle.

Grâce à cette disposition, il est possible de rigidifier le pont, tout en formant un détrompeur.

Suivant une autre caractéristique, tirant partie de la saillie du pont, il devient possible de conformer sa périphérie externe, pour que celle-ci ne fasse pas saillie par rapport à la périphérie externe de la rondelle.

Grâce à cette disposition, le basculement du diaphragme n'est pas perturbé par la présence du pont, qui a ainsi une bonne résistance.

En outre il est possible de former un dégagement pour le passage de l'outil de démontage en conformant la périphérie externe du pont avec deux lignes raccordées à un sommet arrondi.

La description en annexe illustre l'invention en référence aux dessins annexés dans lesquels :
- la figure 1 est une vue en élévation avec arrachement local d'un mécanisme d'embrayage équipé d'un montage selon l'invention ;
- la figure 2 est une vue en coupe axiale d'un ensemble pièce d'accostage-butée de débrayage équipé de la rondelle élastique selon l'invention ;
- la figure 3 est une vue analogue à la figure 2 mais pour une position de désencliquetage de la butée ;
- la figure 4 est une vue en élévation montrant le jonc selon l'invention ;
- la figure 5 est une vue partielle montrant la pièce d'accostage équipée de son jonc ;
- la figure 6 est une vue en élévation montrant la rondelle élastique selon l'invention ;
- la figure 7 est une vue à plus grande échelle montrant le pont selon l'invention et tel que repéré par l'encart C de la figure 6 ;
- la figure 8 est une vue en coupe selon la ligne B-B de la figure 6 ;
- la figure 9 est une vue en coupe selon la ligne A-A de la figure 6.

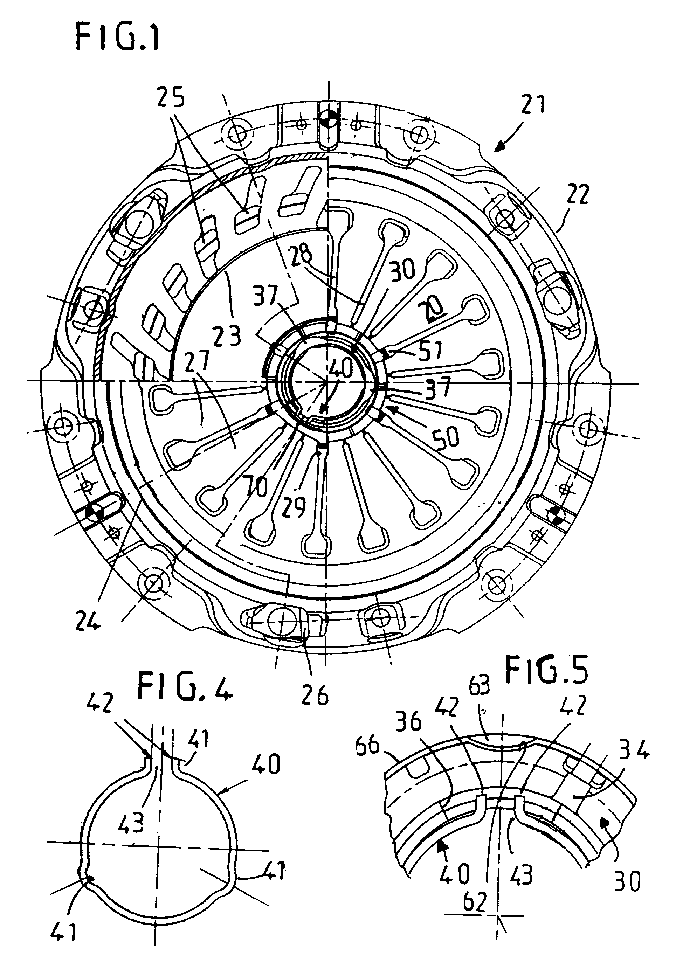

Tel qu'illustré dans les figures 1,2,3, il est mis en oeuvre, pour l'attelage d'une butée de débrayage 10 sur le diaphragme 20 d'un embrayage, d'une part, une pièce d'accostage 30 (ou coupelle d'appui) assujettie, par un montage décrit ultérieurement, à ce diaphragme 20 et, d'autre part, un jonc de couplage 40 élastiquement déformable, ici radialement, porté par la pièce d'accostage 30 et propre à un encliquetage de la butée 10 sur la pièce d'accostage 30.

L'embrayage est du type "tiré" et comporte un mécanisme d'embrayage unitaire 21 avec un couvercle 22 de fixation à un plateau de réaction (non représenté), un plateau de pression 23 et le diaphragme 20.

Le fond du couvercle 22 est ouvert et offre un cordon d'appui 24 à la partie périphérique rondelle Belleville du diaphragme 20 annulaire.

Le plateau 23 offre également un appui 25, ici fractionné, au diaphragme 20.

Le plateau 23 est mobile axialement par rapport au couvercle 22 en étant lié en rotation à celui-ci, ici par des languettes tangentielles 26.

Le cordon 24 est disposé radialement au-dessus de l'appui 25, en sorte que pour débrayer il faut agir en traction, dans le sens de la flèche F de la figure 2, sur l'extrémité interne des doigts 27 du diaphragme 20 pour annuler la sollicitation qu'exerce normalement ledit diaphragme 20 sur le plateau 23.

Les doigts 27 forment la partie interne du diaphragme 20, d'une part, fragmentée en doigts 27 par des fentes 28, et d'autre part, centralement ouverte pour le passage d'une douille 33 de la pièce 30.

Le diaphragme 20 est doté d'échancrures 29 élargies, au nombre de six ici, à l'extrémité interne des doigts 27 pour passage de pattes 51 d'assemblage, d'orientation, globalement axiales, d'une rondelle élastique 50 ondulée à action axiale.

La rondelle 50 porte axialement sur une première face de l'extrémité interne des doigts 27, celle tournée vers la butée 10, et est crochetée, directement ou indirectement, par ses pattes 51 sur la pièce d'accostage 30 après traversée axiale des échancrures 29.

Ainsi la rondelle 50 prend appui sur une première face du diaphragme et sollicite la pièce 30 au contact de la deuxième face des doigts 27, celle tournée à l'oppposé de la butée 10.

Pour ce faire, la pièce d'accostage 30, de forme annulaire, est dotée ici, globalement radialement, d'une collerette 31 profilée pour présenter un bourrelet d'appui 32 annulaire, en ayant ainsi globalement la forme d'un V en section.

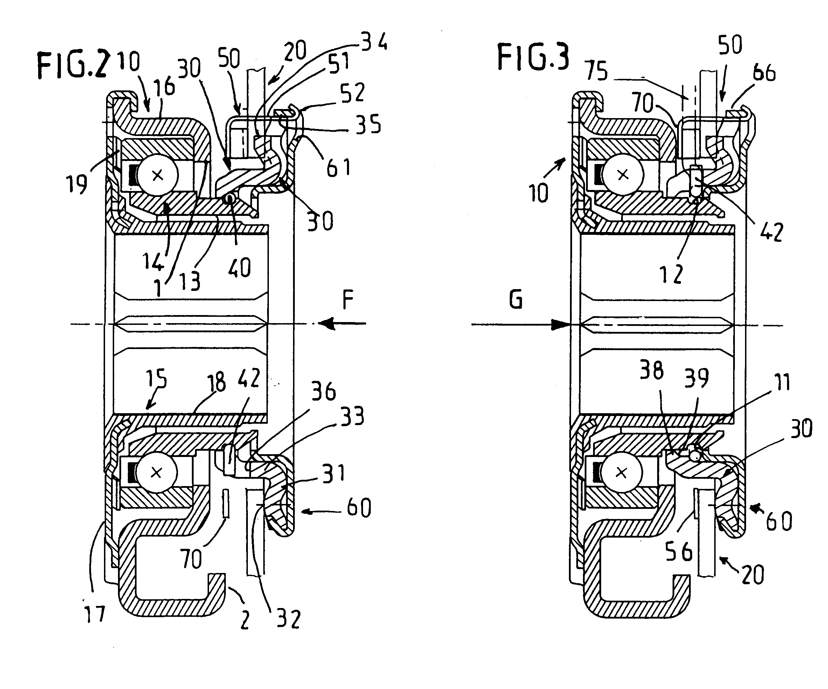

C'est ce bourrelet 32 qui porte sur le diaphragme 20 (figures 2 et 3) en étant maintenu axialement sans jeu au contact de l'extrémité des doigts 27 par la rondelle 50.

Le diaphragme 20 est donc serré élastiquement par pincement.

La pièce 30, avantageusement en tôle emboutie, présente à sa périphérie interne une douille 33, qui se raccorde à la collerette 31 par un coude de pliage arrondi et qui, s'étendant globalement axialement, traverse l'ouverture centrale du diaphragme 20.

La collerette 31 est dotée de déformations locales saillante axialement 34, ici au nombre de trois, pour pénétration dans les échancrures 29 et blocage en rotation de la pièce 30 par rapport au diaphragme 20.

Cette collerette 31 est munie à sa périphérie externe de six échancrures 35, régulièrement réparties circulairement comme les pattes 51, pour passage desdites pattes 51 dont l'extrémité libre 52 est en forme de crochet, pour venir en prise, du côté opposé au diaphragme, avec la face dorsale d'une pièce de retenue 60.

Bien entendu on peut prévoir un autre mode d'assemblage, par exemple un sertissage, l'extrémité des pattes 51 étant rabattue radialement.

Ici la rondelle 50 est donc crochetée sur la pièce 60 grâce à des retours 52, en forme de crosse-d'évêque, dirigés à l'opposé de l'axe de la pièce 30.

La douille 33 présente, à son extrémité libre, une échancrure 36 et deux bossages 37 ainsi qu'un rebord radial 38 dirigé vers l'axe de l'ensemble et délimitant l'extrémité libre de ladite douille 33.

Pour son maintien centré par rapport à la coupelle 30, le jonc présente, ici trois pattes 41 saillantes vers l'extérieur, dont l'une est ouverte par une fente 43 pour délimitation des brins radiaux 42.

Les deux pattes fermées 41 sont disposées symétriquement par rapport à la patte ouverte.

Plus précisément les bossages 37 sont destinés à recevoir deux des pattes 41, s'étendant globalement radialement, tandis que l'échancrure 36, ouverte axialement, est propre à recevoir la patte ouverte 41 et à permettre un passage à jeu circonférentiel des brins radiaux 42, lesquels s'étendent en-dessous de la rondelle 50. L'échancrure 36 est profonde et s'étend jusqu'au voisinage du diaphragme 20.

Les bossages 37 sont réalisés par déformation affectant ici axialement la totalité de la douille 33. Ils sont fermés par le rebord 38 en interrompant une portée 39.

Ces bossages 37 saillants vers l'extérieur de la douille 33 affectent également la portée tronconique 39 en l'interrompant.

Ainsi qu'on le sait, la fente 43 permet un accroissement de l'élasticité du jonc 40 ainsi que son démontage, comme décrit ultérieurement.

Ce jonc 40, ici de forme globalement annulaire, suivant une caractéristique de l'invention, a une forme plane, en étant réalisé en fil rond, deux de ses pattes 41 étant globalement en forme de demi-onde, complémentaires à celles des bossages 37, les brins 42 s'étendant radialement en direction de la rondelle 50.

Le jonc 40 est porté intérieurement par la pièce 30 et plus précisément par l'alésage interne de la douille 33.

Il est propre à prendre appui, d'une part, sur la portée tronconique 39 qu'offre intérieurement la douille 33, et d'autre part, sur une portée d'entraînement 11 formée par l'un des flancs d'une gorge 12 que présente la butée de débrayage 10.

Le jonc 40 permet une solidarisation axiale au moins dans le sens de la flèche F de la figure 2 entre la pièce 30 et la butée 10.

Cette butée 10 comporte un élément de manoeuvre 15, propre à être soumis à l'action d'un organe de commande, telle qu'une fourchette de débrayage, et un élément d'attaque 13 propre à agir en traction sur le diaphragme 20 par l'intermédaire du jonc 40 et de la pièce 30.

Ici l'élément 13 est formé à la faveur d'un prolongement axial de la bague interne d'un roulement à billes 14, qui est attelé par un capot 16 à l'élément 15.

Cet élément de manoeuvre 15 a une forme de L inversée en section et comporte un flasque métallique transversal 17 sur lequel est surmoulé un manchon axial 18 en matière plastique, pour coulissement sur un quelconque organe de guidage, telle qu'une trompette de débrayage.

La butée 10 est type à auto-centrage maintenu et présente pour ce faire un moyen élastique à action axiale 19, ici une rondelle ondulée, qui prend appui sur le flasque 17, pour sollicitation de la bague externe du roulement 14 en direction d'un rebord radial 1 dirigé vers l'axe de l'ensemble du capot 16 assemblé par sertissage (figure 2) avec le flasque 17 et à l'aide de pattes repliées dudit flasque 17.

C'est sur des rebords radiaux 2, en forme de crochets de retenue, du capot 16 qu'est propre à agir ici une fourchette de débrayage.

Le jonc 40 radialement élastiquement déformable est retenu axialement lors du montage par encliquetage de la butée 10 sur la pièce 30 (dans le sens de la flèche G de la figure 3), par une cage formée axialement entre une portée de la douille 33 (figure 3) et la pièce de retenue 60 rapportée ici par sertissage sur la collerette 31, ladite plaque 60 présentant des ouvertures 61 pour le passage des pattes 51 et crochetage de celles-ci (figures 2 et 3).

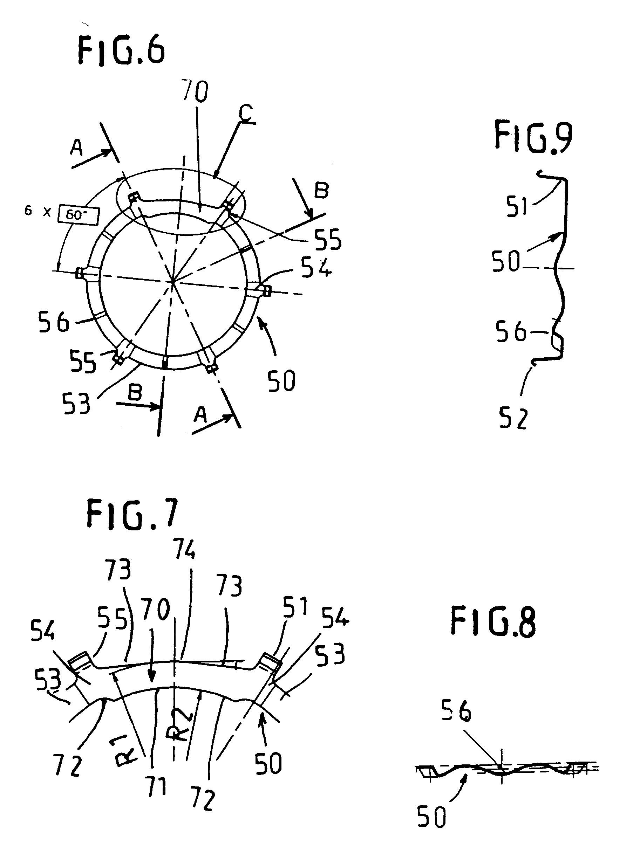

Comme mieux visible dans les figures 2,3 et 5, la pièce 60 présente un rebord axial 66 à sa périphérie externe, dans lequel sont pratiquées par déformation, des pattes 63 en forme de demi-ondes pénétrant dans des entailles 62 tournées vers le diaphragme 20 (figure 5) de forme complémentaire que présente la périphérie externe de la collerette 31 dans sa partie dégagente.

La fixation de la pièce 60 est donc réalisée par sertissage, avec disposition des déformations 34 entre deux pattes de sertissage 63 ; les bossages 37 étant disposés en regard de deux pattes 63, tandis qu'une patte 63 est disposée en regard de l'échancrure 36.

Grâce à ceci la pièce 30 est robuste et un démontage et un remontage irréprochable de la butée peut être réalisé, le jonc étant emprisonné dans la cage décrite ci-dessus.

Ici les brins 42 du jonc 40 sont disposés dans un plan radial médian pénétrant axialement entre le diaphragme 20 et la rondelle 50 comportant globalement une paroi transversale avec des ondulations 53, régulièrement réparties circulairement, s'étendant circonférentiellement chacune entre deux pattes axiales 51.

Les pattes 51 s'étendent en saillie axiale par pliage à partir de la périphérie externe de la rondelle 50 et se raccorde à celles-ci chacune par une zone d'ancrage globalement plane 54.

Cette zone 54 s'étend sur toute la hauteur de la rondelle 50 en forme de couronne, et se prolonge radialement en saillie, par rapport à la périphérie externe de la rondelle 50, par une zone radiale 55, dite de raccordement.

Cette zone 55 est rétrécie et est globalement de même largeur que les pattes 51, pour raccordement à celles-ci.

La zone 54 va en s'amincissant de la périphérie externe à la périphérie interne de la rondelle 50 et s'étend symétriquement de part et d'autre de l'axe de la patte 51 et de l'axe de la zone 55.

Les ondulations 53 ont une forme d'arc de cercle, et s'étendent chacune entre deux zones d'ancrage 54 successives, avec dans leur zone médiane un sommet 56 au contact du diaphragme 20.

Bien entendu en variante chaque ondulation 53 peut présenter plusieurs sommets.

Suivant l'invention, un pont 70 relie entre elles deux zones d'ancrage 54 successives, en étant dans le même plan que celles-ci, et ledit pont 70 est en correspondance avec la patte ouverte 41 du jonc 40 pour accès à celle-ci.

Ce sont donc les sommets 56 des deux ondulations 53 encadrant le pont 70 qui soutiennent celui-ci, en sorte qu'un espace axial est ménagé entre le pont 70 et le diaphragme 20 pour accès à la patte ouverte 41.

Suivant une autre caractéristique le pont 70 s'étend radialement intérieurement en saillie par rapport à la périphérie interne de la rondelle 50.

Cette saillie forme ici une languette 71 raccordée à chacune de ses extrémités circonférentielles, par un arrondi 72 à la zone d'ancrage 54 concernée.

Suivant une autre caractéristique, le pont 70 est, à sa périphérie externe, globalement en-deçà de la circonférence délimitant la périphérie externe de la rondelle 30.

Ce pont 70 est délimité extérieurement par deux lignes rectilignes inclinées 73 se raccordant de manière symétrique à un sommet 74 médian en arc de cercle du pont 70.

Ces lignes 73 se raccordent par un arrondi aux zones 55.

Le sommet 74 est situé sur une circonférence de rayon R1 légèrement inférieur au rayon de la circonférence délimitant la périphérie externe de la rondelle 50, tandis que l'extrémité de la languette 71 est en arc de cercle de rayon R2 inférieur à celui délimitant la périphérie interne de la rondelle 50.

Ainsi l'encombrement radial externe de la rondelle 50 n'est pas augmenté, tout en ayant suffisamment de matière grâce à la languette 71 pour avoir un pont résistant et sans trop perturber l'élasticité de la rondelle 50, la languette 71 étant faiblement saillante.

Le basculement du diaphragme n'est pas gêné ainsi par le pont 70 et en outre il est réalisé un détrompeur pour l'indexation de la rondelle 50 afin que le pont 70 soit disposé en correspondance avec l'échancrure 36.

On remarquera que la hauteur du pont est maximum au niveau des zones d'ancrage 54 et est minimum au niveau du sommet 74.

Grâce à l'invention il est possible d'engager à la faveur du pont 70 une pince conformée 75 (figure 3) entre le diaphragme 20 et le rondelle 50, pour ouvrir le jonc 40 en agissant sur les brins 42 saillants de celui-ci. Ici, les brins 42 s'étendent radialement dans l'ouverture centrale du diaphragme 30 et de la rondelle 50, en dessous de la patte 71.

On notera qu'au cours de cette ouverture la pince 75 n'est nullement gênée par une quelconque ondulation et qu'un espace circonférentiel assez grand est présent, ladite pince 75 pouvant même passer sous les zones d'ancrage 54.

On appréciera que les lignes 73 et le sommet 74 réalisent un bon dégagement pour la pince 75 ainsi qu'un détrompeur.

Le démontage s'effectue en effectuant une surcourse de la butée selon la flèche G de la figure 3, tout en ouvrant le jonc 40 avec la pince 75 puis en déplaçant ensuite la butée en sens inverse, le jonc 40 étant toujours maintenu ouvert par la pince 75.

Ainsi qu'il ressort à l'évidence de la description, même dans le cas (figure 2) où les brins sont disposés au niveau du rebord 2 crocheté du capot 16, un démontage est possible.

La présente invention étend donc les possibilités de démontage, tout en ayant un ensemble butée-pièce d'accostage très compact axialement.

On appréciera que les bossages 37 permettent de ne pas affaiblir la douille 33, et que le sertissage de la plaque 60 est favorable à la compacité de l'ensemble tout en permettant un démontage et un remontage irréprochable de la butée.

On notera que la douille 33 est également courte ainsi que l'élément d'attaque 13.

Tout ceci rend économique la butée de débrayage et la pièce d'accostage, tout en ayant une pièce d'accostage suffisamment robuste.

Bien entendu la présente invention n'est pas limitée aux exemples de réalisation décrits, en particulier la butée 10 peut ne pas être du type auto-centreuse, le roulement 14 étant dans ce cas monté sans jeu radial par rapport au capot, et étant en contact direct avec le flasque 17.

La rondelle 50 peut assembler également par crochetage la plaque de retenue à la pièce d'accostage comme décrit dans le susmentionné brevet FR-A-2 633 353.

La présence d'une plaque de retenue peut ne pas être indispensable dans certaines applications.

Les brins 42 peuvent se prolonger par un tronçon axial selon les applications et la position du jonc par rapport au diaphragme 20 et à la rondelle élastique 50.

Bien entendu la pince 75 est conformée selon les applications et peut avoir une partie légèrement inclinée, comme visible à la figure 3.

Le manchon 18 peut être d'un seul tenant avec le flasque 17 et l'assemblage élément d'attaque 13, élément de manoeuvre 15 peut être différent en étant réalisé par exemple par clipsage. La pièce 30 peut être plus massive.

Les brins 42 peuvent être disposés dans un plan médian qui pénètre dans l'espace axial délimité par la rondelle 50 et le diaphragme 20, comme dans les figures, ou en variante ne pas pénétrer dans ledit espace, comme par exemple à la figure 1 du document FR-A-2 633 353, l'outil de démontage étant conformé en conséquence.

Enfin la patte ouverte 43 peut ne pas consister en deux brins radiaux, mais par exemple présenter deux branches en arc de cercle, éventuellement dotée de prolongements axiaux comme décrit dans le document FR-A-2 597 560.

## Revendications

1. Montage pour l'assujettissement d'une pièce d'accostage (30) à un diaphragme (20), notamment pour véhicules automobiles, du genre mettant en oeuvre outre la pièce d'accostage (30), un jonc de couplage (40) élastiquement déformable, doté d'une patte radiale saillante ouverte (41) et propre à un encliquetage d'une butée de débrayage (10) sur la pièce d'accostage (30), une rondelle élastique ondulée (50), disposée du côté du diaphragme (20) opposé à la pièce d'accostage (30) et dotée de pattes d'assemblage (51) globalement axiales, propres à traverser le diaphragme, dans lequel le jonc de couplage (40) est porté par la pièce d'accostage (30) et la rondelle élastique (50) est assemblée à la pièce d'accostage (30) par ses pattes (51) issues de zones d'ancrage (54) reliées entre elles par des ondulations (53), propres à venir en contact avec le diaphragme (20), caractérisé en ce qu'un pont (70) relie entre elles deux zones d'ancrage successives (54) en étant dans le même plan que celles-ci, et en ce que ledit pont (70) est en correspondance avec la patte ouverte (41) du jonc (40) pour accès à celle-ci.

2. Montage selon la revendication 1, caractérisé en ce que le pont (70) s'étend radialement, intérieurement en saillie, par rapport à la périphérie interne de ladite rondelle (50).

3. Montage selon la revendication 2, dans lequel les zones d'ancrage (54) s'étendent sur toute la hauteur de ladite rondelle (50) caractérisé en ce que la saillie consiste en une languette (71) raccordée par un arrondi (72) à la périphérie interne de chacune des zones d'ancrage (54) concernées.

4. Montage selon l'une quelconque des revendications 1 à 3, caractérisé en ce que, à sa périphérie externe, le pont (70) est disposé à l'intérieur de la circonférence délimitant la périphérie externe de ladite rondelle (50).

5. Montage selon la revendication 4, caractérisé en ce que le pont (70) est délimité à sa périphérie externe par deux lignes rectilignes (73) se raccordant de manière symétrique à un sommet médian (74) en arc de cercle.

6. Montage selon la revendication 5, caractérisé en ce que le sommet (74) est situé sur une circonférence de rayon inférieur à celui de la circonférence délimitant la périphérie externe de la rondelle (50).

7. Montage selon l'une quelconque des revendications 1 à 6, caractérisé en ce que le jonc de couplage (40) s'étend tout entier radialement dans l'ouverture centrale du diaphragme (20) et de la rondelle élastique ondulée (50).

8. Montage selon l'une quelconque des revendications 1 à 7, dans lequel le jonc de couplage (40) est réalisé en fil rond, caractérisé en ce que le jonc de couplage (40) est de forme plane.

9. Montage selon la revendication 7 ou 8, caractérisé en ce que la patte ouverte (41) du jonc de couplage (40) comporte deux brins radiaux (42) séparés par une fente (43).

10. Montage selon la revendication 9, caractérisé en ce que lesdits brins (42) sont disposés dans un plan médian qui pénètre dans l'espace axial délimité par ladite rondelle élastique (50) et le diaphragme (20).

11. Montage selon l'une quelconque des revendications 7 à 10, dans lequel la pièce d'accostage (30) présente une collerette d'appui (31) profilée se raccordant à une douille (33), s'étendant globalement axialement et traversant l'ouverture centrale du diaphragme (20), caractérisé en ce que ladite douille (33) est affectée par deux bossages (37) permettant un montage de pattes radiales (41) de forme complémentaire

12. Montage selon la revendication 11, caractérisé en ce que la pièce d'accostage (30) présente une échancrure (36) à son extrémité libre pour réception à jeu de la patte ouverte (41) du jonc (40) et en ce que ledit pont (70) est disposé en correspondance avec ladite échancrure (36).

## Claims

1. A fastening assembly for securing a connecting piece (30) to a diaphragm (20), especially for motor vehicles, of a kind comprising, besides the connecting piece (30), a resiliently deformable coupling ring (40) having an open, radially projecting lug element (41) and adapted for the snap fitting of a clutch release bearing (10) on to the connecting piece (30), a corrugated resilient ring (50), disposed on the side of the diaphragm (20) opposite to the connecting piece (30) and having generally axial assembly lugs (51) adapted to extend through the diaphragm, wherein the coupling ring (40) is carried by the connecting piece (30), and the resilient ring (50) is assembled to the connecting piece (30) by means of its lugs (51), which project from anchor zones (54) that are joined together through corrugations (53) adapted to make contact with the diaphragm (20), characterised in that a bridge (70) joins together two successive anchor zones (54), being in the same plane as the latter, and in that the said bridge (70) is in a corresponding relationship with the open lug element (41) of the ring (40), for access to the latter.

2. An assembly according to Claim 1, characterised in that the bridge (70) projects radially inwards with respect to the inner periphery of the said ring (50).

3. An assembly according to Claim 2, in which the anchor zones (54) extend over the whole depth of the said ring (50), characterised in that the projection consists of a tongue (71) which is connected by a rounded portion (72) to the inner periphery of each of the anchor zones (54) concerned.

4. An assembly to any one of Claims 1 to 3, characterised in that, at its outer periphery, the bridge (70) is disposed inside the circumference that delimits the outer periphery of the said ring (50).

5. An assembly according to Claim 4, characterised in that the bridge is delimited at its outer periphery by two straight lines (73) joined symmetrically to a summit point (74) on an arc of a circle.

6. An assembly according to Claim 5, characterised in that the summit point lies on a circumference having a radius smaller than that of the circumference delimiting the outer periphery of the ring (50).

7. An assembly according to any one of Claims 1 to 6, characterised in that the coupling ring (40) lies entirely within the central opening of the diaphragm (20) and of the corrugated resilient ring (50).

8. An assembly according to any one of Claims 1 to 7, in which the coupling ring (40) is made from round wire, characterised in that the coupling ring (40) is formed flat.

9. An assembly according to claim 7 or Claim 8, characterised in that the open lug element (41) of the coupling ring (40) comprised two radial fingers (42) separated by a gap (43).

10. An assembly according to Claim 9, characterised in that the said fingers (42) are disposed in a median plane which extends into the axial space delimited by the said resilient ring (50) and the diaphragm (20).

11. An assembly according to any one of Claims 7 to 10, in which the connecting piece (30) comprises a profiled thrust collar (31), joined to a projecting portion (33) which extends generally axially and through the central opening of the diaphragm (20), characterised in that the said projecting portion (33) includes two projecting elements (37) for the fitting thereto of radial lug elements (41) of complementary shape.

12. An assembly according to Claim 11, characterised in that the connecting piece (30) has a slot (36) at its free end for receiving, with a clearance, the open lug element (41) of the ring (40), and that in that the said bridge (70) is disposed in corresponding relationship with the said slot (36).

## Patentansprüche

1. Vorrichtung zur Befestigung eines Druckringes (30) auf einer Tellerfeder (20), insbesondere für Kraftfahrzeuge, bei der neben dem Druckring (30) ein elastisch verformbarer Kopplungsring (40) mit einer vorspringenden offenen radialen Klammer (41) für das Einrasten eines Ausrücklagers (10) auf dem Druckring (30) zum Einsatz kommt, sowie eine gewellte Federscheibe (50), die auf der dem Druckring (30) entgegengesetzten Seite der Tellerfeder (20) angeordnet und mit insgesamt axialen Befestigungsklammern (51) für die Durchführung durch die Tellerfeder versehen ist, wobei der Kopplungsring (40) auf dem Druckring (30) aufliegt und die Federscheibe (50) an dem Druckring (30) durch ihre Klammern (51) angefügt ist, die aus Verankerungsbereichen (54) hervorgehen, welche durch Wellungen (53) miteinander verbunden sind, die mit der Tellerfeder (20) in Berührung kommen , **dadurch gekennzeichnet,** daß zwei aufeinanderfolgende Verankerungsbereiche (54) durch eine Brücke (70) miteinander verbunden werden, die sich in der gleichen Ebene wie diese befindet, und daß diese Brücke (70) in Entsprechung zu der offenen Klammer (41) des Kopplungsrings (40) angeordnet ist, um diese zugänglich zu machen.

2. Vorrichtung nach Anspruch 1 , **dadurch gekennzeichnet,** daß sich die Brücke (70) radial innen vorspringend im Verhältnis zu der Innenperipherie der Federscheibe (50) erstreckt.

3. Vorrichtung nach Anspruch 2, bei der sich die Verankerungsbereiche (54) über die gesamte Höhe der Federscheibe (50) erstrecken , **dadurch gekennzeichnet,** daß der Vorsprung aus einer Zunge (71) besteht, die durch eine Abrundung (72) an die Innenperipherie jedes der betreffenden Verankerungsbereiche (54) angeschlossen ist.

4. Vorrichtung nach einem der Ansprüche 1 bis 3, **dadurch gekennzeichnet,** daß die Brücke (70) an ihrer Außenperipherie innerhalb der Kreislinie angeordnet ist, welche die Außenperipherie der Federscheibe (50) begrenzt.

5. Vorrichtung nach Anspruch 4 , **dadurch gekennzeichnet,** daß die Brücke (70) an ihrer Außenperipherie durch zwei gerade Linien (73) begrenzt wird, die sich symmetrisch an einen mittleren Scheitel (74) in Kreisbogenform anschließen.

6. Vorrichtung nach Anspruch 5 , **dadurch gekennzeichnet,** daß sich der Scheitel (74) auf einer Kreislinie mit einem Radius befindet, der kleiner als der Radius der Kreislinie ist, welche die Außenperipherie der Federscheibe (50) begrenzt.

7. Vorrichtung nach einem der Ansprüche 1 bis 6, **dadurch gekennzeichnet,** daß sich der Kopplungsring (40) vollständig radial in die mittige Öffnung der Tellerfeder (20) und der gewellten Federscheibe (50) erstreckt.

8. Vorrichtung nach einem der Ansprüche 1 bis 7, bei welcher der Kopplungsring (40) aus Runddraht ausgeführt ist , **dadurch gekennzeichnet,** daß der Kopplungsring (40) eine ebene Form aufweist.

9. Vorrichtung nach Anspruch 7 oder 8 , **dadurch gekennzeichnet,** daß die offene Klammer (41) des Kopplungsrings (40) zwei radiale Endstücke (42) umfaßt, die durch einen Schlitz (43) getrennt sind.

10. Vorrichtung nach Anspruch 9, **dadurch gekennzeichnet,** daß die Endstücke (42) in einer Mittelebene angeordnet sind, die in den axialen Raum eindringt, der durch die Federscheibe (50) und die Tellerfeder (20) begrenzt wird.

11. Vorrichtung nach einem der Ansprüche 7 bis 10, bei welcher der Druckring (30) einen profilierten Auflagekragen (31) aufweist, der sich an eine Hülse (33) anschließt, die sich insgesamt axial erstreckt und durch die mittige Öffnung der Tellerfeder (20) hindurchgeht , **dadurch gekennzeichnet,** daß diese Hülse (33) zwei Vorsprünge (37) aufweist, die einen Einbau von radialen Klammern (41) mit dazu passender Form ermöglichen.

12. Vorrichtung nach Anspruch 11, **dadurch gekennzeichnet,** daß der Druckring (30) an seinem freien Ende eine Aussparung (36) aufweist, um mit Spiel die offene Klammer (41) des Rings (40) aufzunehmen, und daß die Brücke (70) in Entsprechung zu dieser Aussparung (36) angeordnet ist.
